# EUROPÄISCHE PATENTANMELDUNG

(11) **EP 3 131 065 A1**
(43) Veröffentlichungstag der Anmeldung: **15.02.2017**
(21) Anmeldenummer: 15181141.1
(22) Anmeldetag: 14.08.2015
(51) Int. Cl.: G07C 9/00, G07C 9/02

(54) **VERFAHREN UND SYSTEM ZUR ZUGANGSKONTROLLE**

(71) Anmelder: SKIDATA AG, 5083 Grödig/Salzburg (AT)
(72) Erfinder: Clemente, Jorge, 5400 Hallein (AT); Schlechter, Thomas, 5201 Seekirchen am Wallersee (AT); Dr. Surkau, Reinhard, 83278 Traunstein (DE)
(74) Vertreter: Karakatsanis, Georgios

(57) **Zusammenfassung**

Es wird ein Verfahren zur Zugangskontrolle vorgeschlagen, wobei die Überprüfung einer Zugangsberechtigung anhand der Auswertung einer von einem einer Zugangskontrollvorrichtung (3, 4, 5, 6) in Zugangsrichtung am nächsten befindlichen mobilen elektronischen Gerät oder einem einer Zugangskontrollvorrichtung (3, 4, 5, 6) am nächsten befindliche Datenträger über den Bluetooth Low Energy-Standard im Rahmen eines "Broadcasting" in regelmäßigen Abständen gesendeten ID, der zumindest eine Zugangsberechtigung eindeutig zugeordnet ist, erfolgt, welche von mit einem Computer umfassend eine CPU und Speichermittel verbundenen BLE Sende-Empfangseinheiten (TRX-1, TRX-2, TRX-3, TRX-4) in Reichweite des mobilen elektronischen Gerätes oder des Datenträgers empfangen wird, wobei die Lokalisierung der mobilen elektronischen Geräte oder der Datenträger mittels der Auswertung des Received Signal Strength Indikators (RSSI) durchgeführt wird, wobei die Signalstärke gemessen wird, mit der das Signal eines mobilen elektronischen Gerätes oder eines Datenträgers enthaltend die ID von BLE Sende-Empfangseinheiten (TRX-1, TRX-2, TRX-3, TRX-4) empfangen wird.

## Beschreibung

Die vorliegende Erfindung bezieht sich auf ein Verfahren zur Zugangskontrolle gemäß dem Oberbegriff des Patentanspruchs 1. Des Weiteren bezieht sich die Erfindung auf ein Zugangskontrollsystem, insbesondere zur Durchführung des erfindungsgemäßen Verfahrens.

Aus dem Stand der Technik sind Verfahren und Systeme zur Zugangskontrolle für Personen oder Fahrzeuge bekannt. Hierbei ist in der Regel vorgesehen, eine Zugangskontrolle mittels des berührungslosen Auslesens von Zugangsberechtigungen durchzuführen, wobei Zugangskontrollvorrichtungen vorgesehen sind, die Mittel zum Erfassen und Auswerten der Zugangsberechtigungen sowie mechanische oder sonstig ausgeführte Sperrorgane aufweisen, die nach Vorliegen einer gültigen Zugangsberechtigung automatisch oder manuell von einer Sperrstellung in eine Freistellung überführt werden.

Zum berührungslosen Auslesen von Zugangsberechtigungen werden in der Regel RFID-Leseeinrichtungen verwendet, umfassend zumindest eine RFID-Antenneneinheit, welche mit RFID-Transpondern als Datenträger zum Auslesen einer Zugangsberechtigung kommuniziert. In nachteiliger Weise ist die Reichweite einer nach dem Stand der Technik durchgeführten RFID-Interaktion zwischen einer RFID-Antenneneinheit und einem RFID-Transponder relativ gering. Langreichweitige RFID-Interaktionen erfolgen im Mikrowellenbereich und verbrauchen viel Energie, so dass in nachteiliger Weise zur Versorgung eines RFID-Transponders mit Energie eine eigene Stromversorgung benötigt wird.

Ein weiterer Nachteil der aus dem Stand der Technik bekannten Verfahren zur Zugangskontrolle mittels RFID-Interaktion zwischen einer Leseeinrichtung und einem RFID-Transponder liegt darin, dass die Anzahl der mobilen Geräte, welche RFID-Standards unterstützen, relativ gering ist. Somit werden oft RFID-Transponder als Datenträger für Zugangsberechtigungen verwendet, was zum einen in höheren Kosten und zum anderen in der Notwendigkeit des Mitführens einer weiteren Komponente für die Benutzer des Zugangskontrollsystems resultiert.

Zudem wird durch die Sperrorgane der verwendeten Zugangskontrollvorrichtungen und die damit einhergehende Blockade des Zutritts der Zugang, insbesondere für Personen unkomfortabel gestaltet. Die in Verbindung mit den Sperrorganen durchgeführte Zugangskontrolle resultiert demnach in Stress, wodurch das Freizeitvergnügen signifikant beeinträchtigt wird. Hinzu kommt, dass bei getaktet fahrenden Transportmitteln, wie beispielsweise bei Seilbahnen oder Skiliften, das Vorsehen der Sperrorgane oft dazu führt, dass die Förderkapazität der Transportmittel nicht im vollen Umfang ausgenutzt wird.

Der vorliegenden Erfindung liegt die Aufgabe zugrunde, ein Verfahren zur Zugangskontrolle anzugeben, durch dessen Durchführung die Zugangskontrolle vereinfacht wird. Ferner soll ein System, insbesondere zur Durchführung des erfindungsgemäßen Verfahrens angegeben werden.

Diese Aufgabe wird für ein Verfahren durch die Merkmale des Patentanspruchs 1 gelöst. Ein System ist Gegenstand des Patentanspruchs 9. Weitere erfindungsgemäße Ausgestaltungen und Vorteile gehen aus den entsprechenden Unteransprüchen hervor.

Demnach wird ein Verfahren zur Zugangskontrolle vorgeschlagen, im Rahmen dessen die Überprüfung einer Zugangsberechtigung anhand der Auswertung einer von einem einer Zugangskontrollvorrichtung in Zugangsrichtung am nächsten befindlichen mobilen elektronischen Gerät oder einem einer Zugangskontrollvorrichtung am nächsten befindliche Datenträger über den Bluetooth Low Energy-Standard (im Folgenden BLE genannt) im Rahmen eines "Broadcasting" in regelmäßigen Abständen gesendeten ID, der zumindest eine Zugangsberechtigung eindeutig zugeordnet ist, erfolgt, welche von mit einem Computer umfassend eine CPU und Speichermittel verbundenen BLE Sende-Empfangseinheiten in Reichweite des mobilen elektronischen Gerätes oder des Datenträgers empfangen wird, wobei die Lokalisierung der mobilen elektronischen Geräte oder der Datenträger mittels der Auswertung des Received Signal Strength Indikators (RSSI) durchgeführt wird, wobei die Signalstärke gemessen wird, mit der das Signal eines mobilen elektronischen Gerätes oder eines Datenträgers enthaltend die ID von BLE Sende- Empfangseinheiten empfangen wird.

Die Verwendung des Bluetooth Low Energy-Standards, im Folgenden BLE genannt, resultiert in einem deutlich geringeren Stromverbrauch als beim herkömmlichen Bluetooth-Standard und in vorteilhafter Weise auch in einer hohen Reichweite, die bis zu 100 Meter betragen kann.

Durch die Verwendung des langreichweitigen, energiesparenden BLE-Standards können von mobilen elektronischen Geräten wie Smartphones, Tablets oder Smartwatches oder von Datenträgern gesendete ID's, denen Zugangsberechtigungen eindeutig zugeordnet sind, von BLE Sende-Empfangseinheiten empfangen werden, ohne den Stromverbrauch signifikant zu erhöhen. Nach dem Empfangen einer ID von zumindest einer BLE Sende-Empfangseinheit, wird zunächst eine Lokalisierung durchgeführt, wobei bei einem einer Zugangskontrollvorrichtung in Zugangsrichtung am nächsten befindlichen mobilen elektronischen Gerät oder bei einem einer Zugangskontrollvorrichtung am nächsten befindlichen Datenträger überprüft wird, ob dieser ID eine gültige Zugangsberechtigung zugeordnet ist, wobei diese Auswertung in einem mit der BLE Sende- Empfangseinheit verbundenen Computer oder in einem mit dem Computer verbundenen Server durchgeführt wird. Die ID kann z.B. eine Seriennummer des mobilen elektronischen Gerätes oder des Datenträgers sein. Alternativ können die Zugangsberechtigungen direkt auf den mobilen elektronischen Geräten oder auf den Datenträgern abgelegt sein.

Gemäß der Erfindung wird für den Fall eines Zugangskontrollsystems mit einem mehrspurigen Zugang, wobei jeder Spur eine Zugangskontrollvorrichtung zugeordnet ist, vorgeschlagen, dass jede Zugangskontrollvorrichtung zumindest eine BLE Sende- Empfangseinheit aufweist, wobei die BLE Sende-Empfangseinheiten vorzugsweise derart angeordnet sind, dass die Zutrittsbreite von zwei BLE Sende-Empfangseinheiten flankiert wird und wobei die BLE Sende-Empfangseinheiten mit einem Computer umfassend eine CPU und Speichermittel verbunden sind. Der Computer ist über eine geeignete Schnittstelle kabellos oder kabelgebunden mit einem Server verbunden.

Die mobilen elektronischen Geräte oder die Datenträger senden im Rahmen des so genannten "Broadcasting" in regelmäßigen Abständen über den BLE-Standard eine ID, der zumindest eine Zugangsberechtigung zugeordnet ist. Wenn sich eine BLE Sende-Empfangseinheit in Reichweite eines mobilen elektronischen Gerätes oder eines Datenträgers befindet, wird von der BLE Sende-Empfangseinheit die ID empfangen. Gemäß der Erfindung erfolgt eine Lokalisierung der mobilen elektronischen Geräte oder der Datenträger mittels der Auswertung des Received Signal Strength Indikators (RSSI), wobei die Signalstärke gemessen wird, mit der das Signal eines mobilen elektronischen Gerätes oder eines Datenträgers von BLE Sende-Empfangseinheiten empfangen wird.

Im Rahmen einer ersten Ausgestaltung wird anhand des Verhältnisses der Received Signal Strength Indikatoren, mit denen BLE Sende-Empfangseinheiten des Zugangskontrollsystems das Signal eines mobilen elektronischen Gerätes oder eines Datenträgers enthaltend die ID empfangen, der zumindest eine Zugangsberechtigung eindeutig zugeordnet ist, das Verhältnis der Abstände des mobilen elektronischen Gerätes oder des Datenträgers zu den BLE Sende-Empfangseinheiten ermittelt. Je höher die Signalstärke und somit der Received Signal Strength Indikator, desto kürzer ist die Entfernung zu einer BLE Sende-Empfangseinheit, so dass auf diese Weise anhand der relativen Abstände des mobilen elektronischen Gerätes oder des Datenträgers zu den BLE Sende-Empfangseinheiten die Spur ermittelt wird, in der sich das mobile elektronische Gerät oder der Datenträger befindet.

Im Rahmen einer weiteren Ausgestaltung wird anhand einer Referenzsignalstärke, die in der Regel der Signalstärke in einem Meter Entfernung entspricht und die als Information im Signal des mobilen elektronischen Geräts oder des Datenträgers enthalten ist oder in Abhängigkeit vom mobilen elektronischen Gerät oder vom Datenträger, z.B. vom Typ des Mobiltelefons, in einer im Computer gespeicherten Tabelle abgelegt ist, der Abstand zwischen dem mobilen elektronischen Gerät und den BLE Sende-Empfangseinheiten mit einer Genauigkeit von 1-2 Metern ermittelt, so dass bei einem mehrspurigen Zugang durch eine anschließende Trilateration bzw. bei mehr als drei BLE Sende-Empfangseinheiten durch Multilateration mit hoher Genauigkeit die Spur ermittelt wird, in der sich das mobile elektronische Gerät oder der Datenträger befindet.

Gemäß der Erfindung wird anhand der ermittelten absoluten oder relativen Abstände zwischen sämtlichen mobilen elektronischen Geräten oder Datenträgern, die von BLE Sende-Empfangseinheiten erfasst und einer Spur zugeordnet sind und den BLE Sende-Empfangseinheiten die Reihenfolge der mobilen elektronischen Geräte bzw. der Datenträger in der jeweiligen Spur ermittelt. Auf diese Weise kann eine Zugangskontrolle durchgeführt werden, da bekannt ist, welches mobile elektronische Gerät oder welcher Datenträger sich einer Zugangskontrollvorrichtung am nächsten befindet, so dass dessen ID in Bezug auf eine gültige Zugangsberechtigung ausgewertet wird.

Für den Fall, dass die Zutrittsbreite von zwei BLE Sende-Empfangseinheiten flankiert wird und der Received Signal Strength Indikator bei beiden BLE Sende-Empfangseinheiten zeigt, dass die Aufenthaltswahrscheinlichkeit eines mobilen elektronischen Gerätes oder des Datenträgers in der Spur vor der Durchtrittslinie am höchsten ist, wird im Rahmen einer weiteren Ausgestaltung der Erfindung dieses mobile elektronische Gerät bzw. der Datenträger als relevant für die Zugangskontrolle erachtet und die ID in Bezug auf eine gültige Zugangsberechtigung analysiert. Je höher die Signalstärke, desto kürzer ist die Entfernung eines mobilen elektronischen Gerätes oder eines Datenträgers zu den beiden BLE Sende-Empfangseinheiten und somit zu der Zugangskontrollvorrichtung.

Für den Fall eines Zugangskontrollsystems mit einem einspurigen Zugang ist eine der einzigen Spur zugeordnete Zugangskontrollvorrichtung vorgesehen, wobei die Zutrittsbreite von zwei BLE Sende-Empfangseinheiten flankiert wird. Hierbei werden ein mobiles elektronisches Gerät oder ein Datenträger der Spur zugeordnet, wenn die Signalstärke, mit der das Signal eines mobilen elektronischen Gerätes oder eines Datenträgers von beiden BLE Sende-Empfangseinheiten empfangen wird in etwa gleich ist. Die Ermittlung der Reihenfolge der mobilen elektronischen Geräte oder der Datenträger in der Spur erfolgt anhand der Signalstärke, mit der das Signal eines mobilen elektronischen Gerätes oder eines Datenträgers von beiden BLE Sende-Empfangseinheiten empfangen wird. Je höher die Signalstärke, desto kürzer ist die Entfernung eines mobilen elektronischen Gerätes oder eines Datenträgers zu den BLE Sende-Empfangseinheiten und somit zu der Zugangskontrollvorrichtung.

Im Rahmen einer weiteren Ausgestaltung der Erfindung kann bei einem Zugangskontrollsystems mit einem einspurigen Zugang eine der einzigen Spur zugeordnete Zugangskontrollvorrichtung vorgesehen sein, wobei die Zugangskontrollvorrichtung eine BLE Sende-Empfangseinheit aufweist. Die Ermittlung der Reihenfolge der mobilen elektronischen Geräte oder der Datenträger in der einzigen Spur erfolgt anhand der Signalstärke, mit der das Signal eines mobilen elektronischen Gerätes oder eines Datenträgers von der BLE Sende-Empfangseinheit empfangen wird; je höher die Signalstärke, desto kürzer ist die Entfernung eines mobilen elektronischen Gerätes oder eines Datenträgers zu den BLE Sende-Empfangseinheiten und somit zu der Zugangskontrollvorrichtung.

Die Zugangskontrollvorrichtungen des Zugangskontrollsystems können in vorteilhafter Weise ohne Sperrorgane ausgeführt sein, wobei die Zugangskontrollvorrichtungen jeweils eine Vorrichtung zur Detektion von Personen aufweisen, die die Zugangskontrollvorrichtung passieren. Beispielsweise kann die Vorrichtung zur Detektion von Personen als Lichtschranke oder Wiegesensor ausgeführt sein.

Wenn eine Person eine Zugangskontrollvorrichtung passiert, was durch die Vorrichtung zur Detektion von Personen erkannt wird, und nach dem Passieren dieser Person das in der der Zugangskontrollvorrichtung zugeordneten Spur gemäß der Lokalisierung an erster Stelle befindliche mobile elektronische Gerät anhand der empfangenen ID dasselbe ist, wie vor dem Passieren der Person, wird ein Zugang ohne Zugangsberechtigung erkannt und ein optisches und/oder akustisches Signal ausgegeben.

Alternativ können die Zugangskontrollvorrichtungen des Zugangskontrollsystems jeweils ein Sperrorgan aufweisen, welches im Öffnungssinne betätigt wird, wenn der ID des gemäß der Lokalisierung an erster Stelle in der der Zugangskontrollvorrichtung zugeordneten Spur befindlichen mobilen elektronischen Gerätes oder Datenträgers eine gültige Zugangsberechtigung zugeordnet ist. Wenn nach dem Passieren einer Person, was durch eine Vorrichtung zur Detektion von Personen oder durch die Betätigung des Sperrorgans erkannt wird, das in der der Zugangskontrollvorrichtung zugeordneten Spur gemäß der Lokalisierung an erster Stelle befindliche mobile elektronische Gerät dasselbe ist, wie vor dem Passieren der Person, wird ein Zugang ohne Zugangsberechtigung erkannt und ein optisches und/oder akustisches Signal ausgegeben.

Gemäß einer Weiterbildung der Erfindung ist dem Eingangsbereich eines Zugangskontrollsystems zumindest eine BLE Sende-Empfangseinheit zugeordnet, welche die mobilen elektronischen Geräte oder die Datenträger anhand der von den mobilen elektronischen Geräten oder Datenträgern gesendeten ID erfasst, die den Eingangsbereich passieren, wobei dem Ausgangsbereich des Zugangskontrollsystems zumindest eine BLE Sende-Empfangseinheit zugeordnet ist, welche die mobilen elektronischen Geräte oder die Datenträger anhand der von den mobilen elektronischen Geräten oder Datenträgern gesendeten ID erfasst, die den Ausgangsbereich passieren, wobei nur Signale von mobilen elektronischen Geräten oder Datenträgern, die durch die zumindest eine dem Eingangsbereich zugeordnete BLE Sende-Empfangseinheit erfasst werden und von der zumindest einen dem Ausgangsbereich zugeordneten BLE Sende-Empfangseinheit noch nicht erfasst sind, von den BLE Sende-Empfangseinheiten der Zugangskontrollvorrichtungen ausgewertet werden. Zur Erfassung der mobilen elektronischen Geräte oder der Datenträger, die den Eingangsbereich oder Ausgangsbereich passieren, werden nur Signale oberhalb einer vorgegebenen Schwelle für die Signalstärke ausgewertet. Auf diese Weise wird vermieden, dass mobile elektronische Geräte oder Datenträger erfasst werden, die sich außerhalb des Zugangskontrollsystems befinden.

Die dem Eingangsbereich und/oder dem Ausgangsbereich eines Zugangskontrollsystems zugeordneten BLE Sende-Empfangseinheiten können in vorteilhafter Weise auch zur Erhöhung der Genauigkeit der Ermittlung der Reihenfolge der mobilen elektronischen Geräte bzw. der Datenträger in der jeweiligen Spur verwendet werden, wobei zu diesem Zweck sämtliche Signale der mobilen elektronischen Geräte bzw. der Datenträger ausgewertet werden, die den Eingangsbereich passiert haben, mit Ausnahme der elektronischen Geräte bzw. Datenträger, die den Ausgangsbereich passiert haben. Zur Erhöhung der Genauigkeit der Ermittlung der Reihenfolge der mobilen elektronischen Geräte bzw. der Datenträger in der jeweiligen Spur werden diese durch eine Trilateration bzw. bei mehr als drei BLE Sende-Empfangseinheiten durch Multilateration lokalisiert, wobei zur Trilateration bzw. Multilateration die relativen oder absoluten Abstände zwischen den mobilen elektronischen Geräten bzw. den Datenträgern und BLE Sende-Empfangseinheiten der Zugangskontrollvorrichtungen und die relativen oder absoluten Abstände zwischen den mobilen elektronischen Geräten bzw. den Datenträgern und der dem Eingangsbereich und/oder dem Ausgangsbereich zugeordneten BLE Sende-Empfangseinheiten herangezogen werden. Die relativen oder absoluten Abstände zwischen den mobilen elektronischen Geräten bzw. den Datenträgern und den BLE Sende-Empfangseinheiten werden wie bereits erläutert anhand der Received Signal Strength Indikatoren ermittelt. Durch die Berücksichtigung der dem Eingangsbereich und/oder dem Ausgangsbereich eines Zugangskontrollsystems zugeordneten BLE Sende-Empfangseinheiten wird die Genauigkeit der Ermittlung der Reihenfolge der mobilen elektronischen Geräte bzw. der Datenträger in der jeweiligen Spur erhöht, da diese BLE Sende-Empfangseinheiten in Bezug auf die BLE Sende-Empfangseinheiten der Zugangskontrollvorrichtungen derart angeordnet sind, dass jeweils zwei Sende-Empfangseinheiten der Zugangskontrollvorrichtungen und die dem Eingangsbereich und/oder dem Ausgangsbereich eines Zugangskontrollsystems zugeordneten BLE Sende-Empfangseinheit ein Dreieck bilden.

Durch das erfindungsgemäße Verfahren werden keine Personen, sondern mobile elektronische Geräte bzw. Datenträger erfasst.

Die Erfindung wird im Folgenden anhand der beigefügten Figuren beispielhaft näher erläutert. Es zeigen:
Figur 1: Eine schematische Darstellung eines gemäß der Erfindung ausgeführten Zugangskontrollsystems mit einem mehrspurigen Zugang;
Figur 2: eine schematische Darstellung eines Teiles eines gemäß der Erfindung ausgeführten Zugangskontrollsystems mit einem mehrspurigen Zugang zur Veranschaulichung der Ermittlung der Spur, in der sich ein mobiles elektronisches Gerät befindet, welches BLE unterstützt; und
Figur 3: eine schematische Darstellung eines Teiles eines gemäß der Erfindung ausgeführten Zugangskontrollsystems mit einem mehrspurigen Zugang zur Veranschaulichung der Ermittlung der Reihenfolge der mobilen elektronischen Geräte in der jeweiligen Spur sowie eine Tabelle zur Erläuterung des Verfahrens der Ermittlung der Reihenfolge der mobilen elektronischen Geräte in der jeweiligen Spur

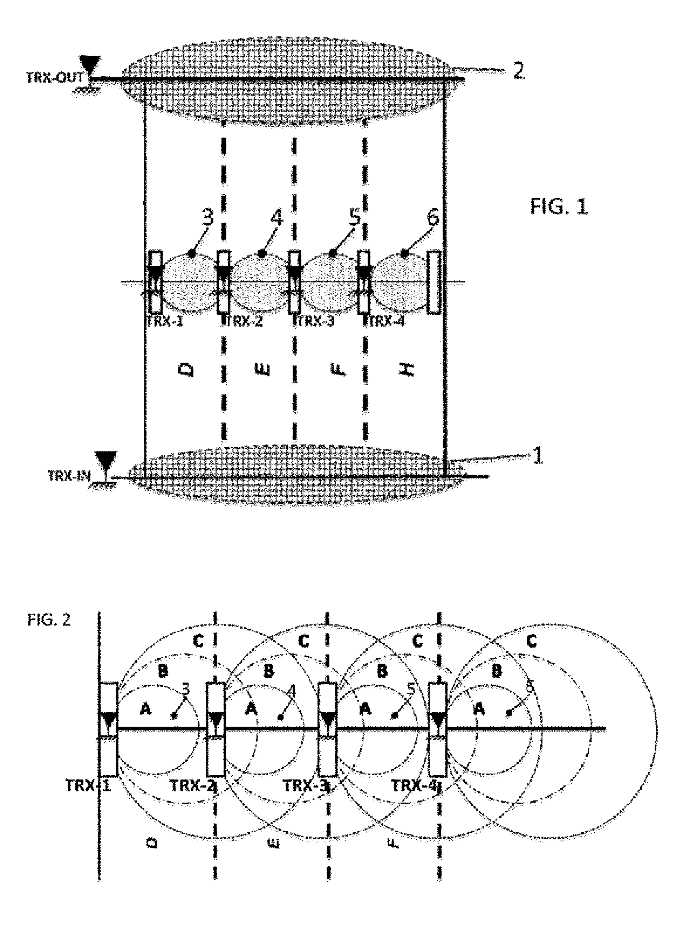

In Figur 1 ist ein gemäß der Erfindung ausgeführtes Zugangskontrollsystem mit einem vierspurigen Zugang, umfassend vier Spuren D, E, F und H, einen Eingangsbereich 1 und einen Ausgangsbereich 2 dargestellt. Es umfasst ferner Zugangskontrollvorrichtungen 3, 4, 5, 6, die jeweils einer Spur D, E, F, H zugeordnet sind, wobei jede Zugangskontrollvorrichtung 3, 4, 5, 6 zumindest eine BLE Sende-Empfangseinheit TRX-1, TRX-2, TRX-3, TRX-4 aufweist. Ferner sind zwei weitere BLE Sende-Empfangseinheiten TRX-IN, TRX-OUT vorgesehen, die dem Eingangs- bzw. dem Ausgangsbereich 1, 2 zugeordnet sind. Bei dem gezeigten Beispiel sind die BLE Sende-Empfangseinheiten TRX-1, TRX-2, TRX-3, TRX-4 derart angeordnet, dass die Zutrittsbreiten der Spuren D, E, F von je zwei BLE Sende-Empfangseinheiten flankiert werden. Im Rahmen einer weiteren, nicht dargestellten Ausgestaltung kann eine weitere BLE Sende-Empfangseinheit vorgesehen sein, so dass auch Spur H von zwei BLE Sende-Empfangseinheiten flankiert wird.

Die BLE Sende-Empfangseinheiten TRX-1, TRX-2, TRX-3, TRX-4, TRX-IN, TRX-OUT sind mit einem Computer umfassend eine CPU und Speichermittel verbunden, wobei die Überprüfung einer Zugangsberechtigung mittels einer Interaktion zwischen einer BLE Sende-Empfangseinheit TRX-1, TRX-2, TRX-3, TRX-4 und einem elektronischen Gerät oder einem Datenträger, auf dem eine ID, der zumindest eine Zugangsberechtigung eindeutig zugeordnet ist, abgelegt ist, basierend auf dem Bluetooth Low Energy-Standard erfolgt. Im Folgenden wird die Erfindung anhand der Verwendung von mobilen elektronischen Geräten erläutert.

Die mobilen elektronischen Geräte senden im Rahmen des so genannten "Broadcasting" in regelmäßigen Abständen über den BLE-Standard eine ID, der zumindest eine Zugangsberechtigung zugeordnet ist. Wenn sich eine BLE Sende-Empfangseinheit TRX-1, TRX-2, TRX-3, TRX-4 in Reichweite eines mobilen elektronischen Gerätes befindet, wird von der BLE Sende-Empfangseinheit über BLE die ID empfangen. Hierbei erfolgt eine Lokalisierung der mobilen elektronischen Geräte mittels des Received Signal Strength Indikators (RSSI), wobei die Signalstärke gemessen wird, mit der das Signal eines mobilen elektronischen Gerätes von BLE Sende-Empfangseinheiten empfangen wird.

Im Rahmen einer ersten Ausgestaltung des erfindungsgemäßen Verfahrens wird anhand des Verhältnisses der Received Signal Strength Indikatoren, mit denen BLE Sende-Empfangseinheiten des Zugangskontrollsystems das Signal eines mobilen elektronischen Gerätes oder eines Datenträgers enthaltend die ID empfangen, der zumindest eine Zugangsberechtigung eindeutig zugeordnet ist, das Verhältnis der Abstände des mobilen elektronischen Gerätes oder des Datenträgers zu den BLE Sende-Empfangseinheiten ermittelt. Je höher die Signalstärke und somit der Received Signal Strength Indikator, desto kürzer ist die Entfernung zu einer BLE Sende-Empfangseinheit, so dass auf diese Weise anhand der relativen Abstände des mobilen elektronischen Gerätes oder des Datenträgers zu den BLE Sende-Empfangseinheiten die Spur ermittelt wird, in der sich das mobile elektronische Gerät oder der Datenträger befindet.

Bezugnehmend auf Figur 1 werden durch die BLE Sende-Empfangseinheit TRX-IN, die dem Eingangsbereich 1 zugeordnet ist, die mobilen elektronischen Geräte anhand der von den mobilen elektronischen Geräten gesendeten ID erfasst, welche den Eingangsbereich 1 passieren, so dass nur Signale von mobilen elektronischen Geräten, die durch die BLE Sende-Empfangseinheit TRX-IN erfasst werden, von den BLE Sende-Empfangseinheiten TRX-1, TRX-2, TRX-3, TRX-4 der Zugangskontrollvorrichtungen 3, 4, 5, 6 ausgewertet werden. Dadurch wird ausgeschlossen, dass ein mobiles Gerät berücksichtigt wird, welches sich einerseits in Reichweite einer BLE Sende-Empfangseinheit TRX-1, TRX-2, TRX-3, TRX-4 und anderseits außerhalb des Zugangskontrollsystems befindet. Ferner werden durch die BLE Sende-Empfangseinheit TRX-OUT, die dem Ausgangsbereich 2 zugeordnet ist, anhand der von den mobilen elektronischen Geräten gesendeten ID die mobilen elektronischen Geräte erfasst, welche den Ausgangsbereich 2 passieren und somit das Zugangskontrollsystem verlassen. Signale von mobilen elektronischen Geräten, die durch die BLE Sende-Empfangseinheit TRX-OUT erfasst werden, werden von den BLE Sende-Empfangseinheiten TRX-1, TRX-2, TRX-3, TRX-4 der Zugangskontrollvorrichtungen 3, 4, 5, 6 nicht ausgewertet. Im Rahmen weiterer Ausgestaltungen können dem Eingangs- und Ausgangsbereich jeweils mehrere BLE Sende-Empfangseinheiten zugeordnet sein. Zur Erfassung der mobilen elektronischen Geräte oder der Datenträger, die den Eingangsbereich oder Ausgangsbereich passieren, werden nur Signale oberhalb einer vorgegebenen Schwelle für die Signalstärke ausgewertet. Auf diese Weise wird vermieden, dass mobile elektronische Geräte oder Datenträger erfasst werden, die sich außerhalb des Zugangskontrollsystems befinden.

Ein Zugangskontrollsystem gemäß der Erfindung, insbesondere zur Durchführung des erfindungsgemäßen Verfahrens weist demnach einen ein- oder mehrspurigen Zugang auf, wobei jeder Spur D, E, F, H eine Zugangskontrollvorrichtung 3, 4, 5, 6 zugeordnet ist, die zumindest eine BLE Sende-Empfangseinheit aufweist, welche mit einem Computer umfassend eine CPU und Speichermittel verbunden ist und eine von mobilen elektronischen Geräten oder Datenträgern über den Bluetooth Low Energy-Standard im Rahmen eines "Broadcasting" in regelmäßigen Abständen gesendete ID, der zumindest eine Zugangsberechtigung eindeutig zugeordnet ist, empfängt, wobei die Überprüfung einer Zugangsberechtigung anhand der Auswertung einer von einem einer Zugangskontrollvorrichtung 3, 4, 5, 6 in Zugangsrichtung am nächsten befindlichen mobilen elektronischen Gerät oder einem einer Zugangskontrollvorrichtung 3, 4, 5, 6 am nächsten befindliche Datenträger gesendeten ID erfolgt.

Hierbei ist dem Eingangsbereich 1 des Zugangskontrollsystems zumindest eine BLE Sende-Empfangseinheit TRX-IN zugeordnet, welche mobile elektronische Geräte oder Datenträger anhand der von den mobilen elektronischen Geräten oder Datenträgern gesendeten ID erfasst, die den Eingangsbereich 1 passieren und wobei dem Ausgangsbereich 2 des Zugangskontrollsystems zumindest eine BLE Sende-Empfangseinheit TRX-OUT zugeordnet ist, welche die mobilen elektronischen Geräte oder die Datenträger anhand der von den mobilen elektronischen Geräten oder Datenträgern gesendeten ID erfasst, die den Ausgangsbereich 2 passieren, wobei die mobilen elektronischen Geräte oder die Datenträger mittels der Auswertung des Received Signal Strength Indikators (RSSI) lokalisierbar sind, wobei die Signalstärke gemessen wird, mit der das Signal eines mobilen elektronischen Gerätes oder eines Datenträgers enthaltend die ID von den Zugangskontrollvorrichtungen 3, 4, 5, 6 zugeordneten BLE Sende-Empfangseinheiten TRX-1, TRX-2, TRX-3, TRX-4 empfangen wird.

Gemäß der Erfindung und bezugnehmend auf Figur 2 wird anhand des Verhältnisses der Received Signal Strength Indikatoren, mit denen BLE Sende-Empfangseinheiten TRX-1, TRX-2, TRX-3, TRX-4, die Zugangskontrollvorrichtungen 3, 4, 5, 6 des Zugangskontrollsystems zugeordnet sind, das Signal eines mobilen elektronischen Gerätes oder eines Datenträgers enthaltend die ID empfangen, der zumindest eine Zugangsberechtigung eindeutig zugeordnet ist, das Verhältnis der Abstände des mobilen elektronischen Gerätes oder des Datenträgers zu den BLE Sende-Empfangseinheiten TRX-1, TRX-2, TRX-3, TRX-4 ermittelt. Je höher die Signalstärke und somit der Received Signal Strength Indikator, desto kürzer ist die Entfernung zu einer BLE Sende-Empfangseinheit, so dass auf diese Weise anhand der relativen Abstände des mobilen elektronischen Gerätes zu den BLE Sende-Empfangseinheiten TRX-1, TRX-2, TRX-3, TRX-4 die Spur ermittelt wird, in der sich das mobile elektronische Gerät befindet. Diese Auswertung wird im Computer oder im Server durchgeführt.

Hierbei wird der Abstand eines mobilen elektronischen Gerätes zu den BLE Sende-Empfangseinheiten in drei Abstandsbereichen "sehr nah", "nah", "entfernt" unterteilt, die mit den Bezugszeichen A, B, C bezeichnet sind. Der Bereich "sehr nah" kann z.B. einem Abstand von weniger als einem Meter entsprechen, wobei der Bereich "nah" einem Abstand zwischen einem Meter und fünf Metern und der Bereich "entfernt" einem Abstand zwischen fünf Metern und zehn Metern entsprechen kann. Im Rahmen weiterer Ausgestaltungen und in Abhängigkeit von der erzielbaren Genauigkeit der Abstandsermittlung kann der Abstand in mehreren Abstandsbereichen, z.B. in vier, fünf oder sechs Bereichen unterteilt werden, wodurch die Auflösung erhöht wird.

Wenn sich bezugnehmend auf Figur 2 ein mobiles elektronisches Gerät im Bereich "sehr nah" hinsichtlich der BLE Sende-Empfangseinheit TRX-2 und im Bereich "nah" hinsichtlich der BLE Sende-Empfangseinheit TRX-1 befindet, wird als Spur, in der sich das mobile elektronische Gerät befindet, die Spur D ermittelt, der die Zugangskontrollvorrichtung 3 zugeordnet ist, welche die BLE Sende-Empfangseinheit TRX-1 aufweist.

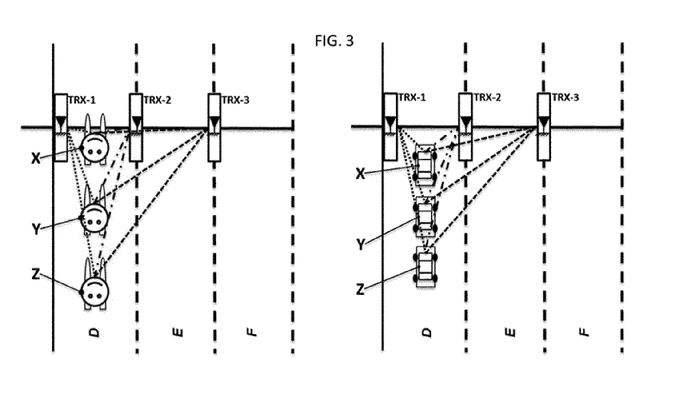

Gemäß der Erfindung und bezugnehmend auf Figur 3 wird anhand der ermittelten Abstände bzw. Abstandsbereiche zwischen sämtlichen mobilen elektronischen Geräten, deren Signal enthaltend die ID von BLE Sende-Empfangseinheiten TRX-1, TRX-2, TRX-3 empfangen wird und anhand des beschriebenen Verfahrens einer Spur zugeordnet sind und den BLE Sende-Empfangseinheiten TRX-1, TRX-2, TRX-3 die Reihenfolge der mobilen elektronischen Geräte in der jeweiligen Spur ermittelt. Im linken Teil der Figur 3 ist ein Zugangskontrollsystem in einem Skigebiet dargestellt, wobei sich in Spur D drei Skifahrer X, Y, Z befinden, die jeweils ein mobiles elektronisches Gerät bei sich tragen, dessen Signal von den BLE Sende-Empfangseinheiten TRX-1, TRX-2, TRX-3 empfangen wird.

Wie der in Figur 3 enthaltenen Tabelle zu entnehmen ist, sind die Skifahrer X, Y, Z, d.h. deren mobile elektronische Geräte von den drei BLE Sende-Empfangseinheiten TRX-1, TRX-2, TRX-3 erfasst. Die Spalten PROX-1, PROX-2, PROX-3 entsprechen den ermittelten Abstandsbereichen A, B, oder C zwischen den mobilen elektronischen Geräten der Skifahrer X, Y, Z und den BLE Sende-Empfangseinheiten TRX-1, TRX-2, TRX-3.

Skifahrer X befindet sich demnach im Abstandsbereich A der BLE Sende-Empfangseinheit TRX-1, im Abstandsbereich A der BLE Sende-Empfangseinheit TRX-2 und im Abstandsbereich B der BLE Sende-Empfangseinheit TRX-3, wobei sich Skifahrer Y im Abstandsbereich A der BLE Sende-Empfangseinheit TRX-1, im Abstandsbereich B der BLE Sende-Empfangseinheit TRX-2 und im Abstandsbereich C der BLE Sende-Empfangseinheit TRX-3 und sich Skifahrer Z im Abstandsbereich B der BLE Sende-Empfangseinheit TRX-1, im Abstandsbereich B der BLE Sende-Empfangseinheit TRX-2 und im Abstandsbereich C der BLE Sende-Empfangseinheit TRX-3 befinden. Daraus wird ersichtlich, dass die Reihenfolge der Skifahrer in der Spur D X, Y, Z ist.

Im rechten Teil der Figur 3 ist die entsprechende Situation für eine Parkhauseinfahrt dargestellt; die Tabelle bezieht sich auch auf dieses Beispiel.

Basierend auf dieser Information kann eine Zugangskontrolle durchgeführt werden, da bekannt ist, welches mobile elektronische Gerät oder welcher Datenträger sich einer Zugangskontrollvorrichtung am nächsten befindet, so dass dessen ID in Bezug auf eine gültige Zugangsberechtigung ausgewertet wird. Die Auswertung der ausgelesenen Zugangsberechtigung kann im Computer, mit dem die BLE Sende-Empfangseinheiten verbunden sind oder im Server, mit dem der Computer verbunden ist, erfolgen.

Im Rahmen einer Weiterbildung der Erfindung wird vorgeschlagen, zur Erhöhung der Genauigkeit der beschriebenen Spurermittlung und der beschriebenen Ermittlung der Reihenfolge von mobilen elektronischen Geräten oder Datenträgern in einer Spur so genannte Angle of Arrival Verfahren einzusetzen. Hierbei weisen die BLE Sende-Empfangseinheiten mindestens zwei Antennen auf, welche das gleiche Signal, welches von einem mobilen elektronischen Gerät oder von einem Datenträger ausgestrahlt wird, zu jeweils unterschiedlichen Zeitpunkten und mit unterschiedlicher Phase empfangen, wobei die Empfangszeitpunkte und die Phase vom Einfallswinkel des Signals abhängig sind. Aus der Phasendifferenz kann anschließend die Richtung ermittelt werden, aus der das Signal ausgestrahlt wird. Auf diese Weise kann auch unterschieden werden, ob sich ein mobiles elektronisches Gerät oder ein Datenträger in Zugangsrichtung vor den Zugangskontrollvorrichtungen oder bereits nach den Zugangskontrollvorrichtungen befindet.

## Patentansprüche

1. Verfahren zur Zugangskontrolle, **dadurch gekennzeichnet, dass** die Überprüfung einer Zugangsberechtigung anhand der Auswertung einer von einem einer Zugangskontrollvorrichtung (3, 4, 5, 6) in Zugangsrichtung am nächsten befindlichen mobilen elektronischen Gerät oder einem einer Zugangskontrollvorrichtung (3, 4, 5, 6) am nächsten befindliche Datenträger über den Bluetooth Low Energy-Standard im Rahmen eines "Broadcasting" in regelmäßigen Abständen gesendeten ID, der zumindest eine Zugangsberechtigung eindeutig zugeordnet ist, erfolgt, welche von mit einem Computer umfassend eine CPU und Speichermittel verbundenen BLE Sende-Empfangseinheiten (TRX-1, TRX-2, TRX-3, TRX-4) in Reichweite des mobilen elektronischen Gerätes oder des Datenträgers empfangen wird, wobei die Lokalisierung der mobilen elektronischen Geräte oder der Datenträger mittels der Auswertung des Received Signal Strength Indikators (RSSI) durchgeführt wird, wobei die Signalstärke gemessen wird, mit der das Signal eines mobilen elektronischen Gerätes oder eines Datenträgers enthaltend die ID von BLE Sende-Empfangseinheiten (TRX-1, TRX-2, TRX-3, TRX-4) empfangen wird.

2. Verfahren zur Zugangskontrolle nach Anspruch 1, **dadurch gekennzeichnet, dass** bei einem Zugangskontrollsystem mit einem mehrspurigen Zugang, jeder Spur (D, E, F, H) eine Zugangskontrollvorrichtung (3, 4, 5, 6) zugeordnet ist, welche zumindest eine BLE Sende-Empfangseinheit (TRX-1, TRX-2, TRX-3, TRX-4) aufweist, wobei anhand des Verhältnisses der Received Signal Strength Indikatoren, mit denen BLE Sende-Empfangseinheiten (TRX-1, TRX-2, TRX-3, TRX-4) des Zugangskontrollsystems das Signal eines mobilen elektronischen Gerätes oder eines Datenträgers enthaltend die ID empfangen, der zumindest eine Zugangsberechtigung eindeutig zugeordnet ist, das Verhältnis der Abstände des mobilen elektronischen Gerätes oder des Datenträgers zu den BLE Sende-Empfangseinheiten (TRX-1, TRX-2, TRX-3, TRX-4) ermittelt wird, wobei anhand der relativen Abstände des mobilen elektronischen Gerätes oder des Datenträgers zu den BLE Sende-Empfangseinheiten (TRX-1, TRX-2, TRX-3, TRX-4) die Spur (D, E, F, H) ermittelt wird, in der sich das mobile elektronische Gerät oder der Datenträger befindet, wobei anhand der ermittelten relativen Abstände zwischen sämtlichen mobilen elektronischen Geräten oder Datenträgern, die von BLE Sende-Empfangseinheiten (TRX-1, TRX-2, TRX-3, TRX-4) erfasst und einer Spur zugeordnet sind und den BLE Sende-Empfangseinheiten (TRX-1, TRX-2, TRX-3, TRX-4) die Reihenfolge der mobilen elektronischen Geräte bzw. der Datenträger in der jeweiligen Spur (D, E, F, H) ermittelt wird.

3. Verfahren zur Zugangskontrolle nach Anspruch 1, **dadurch gekennzeichnet, dass** bei einem Zugangskontrollsystem mit einem mehrspurigen Zugang, jeder Spur (D, E, F, H) eine Zugangskontrollvorrichtung (3, 4, 5, 6) zugeordnet ist, welche zumindest eine BLE Sende-Empfangseinheit (TRX-1, TRX-2, TRX-3, TRX-4) aufweist, wobei anhand einer Referenzsignalstärke, die in der Regel der Signalstärke in einem Meter Entfernung entspricht und die als Information im Signal der mobilen elektronischen Geräte oder der Datenträger enthalten ist oder in Abhängigkeit vom mobilen elektronischen Gerät oder vom Datenträger in einer im Computer gespeicherten Tabelle abgelegt ist, der Abstand zwischen einem mobilen elektronischen Gerät oder einem Datenträger und den BLE Sende-Empfangseinheiten (TRX-1, TRX-2, TRX-3, TRX-4) mit einer Genauigkeit von 1-2 Metern ermittelt wird, so dass durch eine anschließende Trilateration bzw. bei mehr als drei BLE Sende-Empfangseinheiten (TRX-1, TRX-2, TRX-3, TRX-4) durch Multilateration die Spur (D, E, F, H) ermittelt wird, in der sich das mobile elektronische Gerät oder der Datenträger befindet, wobei anhand der ermittelten Abstände zwischen sämtlichen mobilen elektronischen Geräten oder Datenträgern, die von BLE Sende-Empfangseinheiten (TRX-1, TRX-2, TRX-3, TRX-4) erfasst und einer Spur zugeordnet sind und den BLE Sende-Empfangseinheiten (TRX-1, TRX-2, TRX-3, TRX-4) die Reihenfolge der mobilen elektronischen Geräte bzw. der Datenträger in der jeweiligen Spur (D, E, F, H) ermittelt wird.

4. Verfahren zur Zugangskontrolle nach Anspruch 2 oder 3, **dadurch gekennzeichnet, dass** zur Erhöhung der Genauigkeit der Spurermittlung und der Ermittlung der Reihenfolge von mobilen elektronischen Geräten oder Datenträgern in einer Spur (D, E, F, H) Angle of Arrival Verfahren durchgeführt werden, wobei die BLE Sende-Empfangseinheiten (TRX-1, TRX-2, TRX-3, TRX-4) mindestens zwei Antennen aufweisen, welche das gleiche Signal, welches von einem mobilen elektronischen Gerät oder von einem Datenträger ausgestrahlt wird, zu jeweils unterschiedlichen Zeitpunkten und mit unterschiedlicher Phase empfangen, wobei die Empfangszeitpunkte und die Phase vom Einfallswinkel des Signals abhängig sind und wobei aus der Phasendifferenz anschließend die Richtung ermittelt wird, aus der das Signal ausgestrahlt wird.

5. Verfahren zur Zugangskontrolle nach Anspruch 1, **dadurch gekennzeichnet, dass** bei einem Zugangskontrollsystem mit einem einspurigen Zugang eine Zugangskontrollvorrichtung vorgesehen ist, welche der Spur zugeordnet ist, wobei die Zutrittsbreite von zwei BLE Sende-Empfangseinheiten flankiert wird, wobei ein mobiles elektronisches Gerät oder ein Datenträger der Spur zugeordnet werden, wenn die Signalstärke, mit der das Signal eines mobilen elektronischen Gerätes oder eines Datenträgers von beiden BLE Sende-Empfangseinheiten empfangen wird in etwa gleich ist und wobei die Ermittlung der Reihenfolge der mobilen elektronischen Geräte oder der Datenträger in der Spur anhand der Signalstärke, mit der das Signal eines mobilen elektronischen Gerätes oder eines Datenträgers von beiden BLE Sende-Empfangseinheiten empfangen wird, erfolgt.

6. Verfahren zur Zugangskontrolle nach einem der vorangehenden Ansprüche 2-5, **dadurch gekennzeichnet, dass** dem Eingangsbereich (1) des Zugangskontrollsystems zumindest eine BLE Sende-Empfangseinheit (TRX-IN) zugeordnet ist, welche die mobilen elektronischen Geräte oder die Datenträger anhand der von den mobilen elektronischen Geräten oder Datenträgern gesendeten ID erfasst, die den Eingangsbereich (1) passieren und dass dem Ausgangsbereich (2) des Zugangskontrollsystems zumindest eine BLE Sende-Empfangseinheit (TRX-OUT) zugeordnet ist, welche die mobilen elektronischen Geräte oder die Datenträger anhand der von den mobilen elektronischen Geräten oder Datenträgern gesendeten ID erfasst, die den Ausgangsbereich (2) passieren, wobei nur Signale von mobilen elektronischen Geräten oder Datenträgern, die durch die zumindest eine dem Eingangsbereich (1) zugeordnete BLE Sende-Empfangseinheit (TRX-IN) erfasst werden und von der zumindest einen dem Ausgangsbereich (1) zugeordneten BLE Sende-Empfangseinheit (TRX-OUT) noch nicht erfasst sind, von den BLE Sende-Empfangseinheiten (TRX-1, TRX-2, TRX-3, TRX-4) der Zugangskontrollvorrichtungen (3, 4, 5, 6) ausgewertet werden, wobei zur Erfassung der mobilen elektronischen Geräte oder der Datenträger, die den Eingangsbereich (1) oder Ausgangsbereich (2) passieren, nur Signale oberhalb einer vorgegebenen Schwelle für die Signalstärke ausgewertet werden.

7. Verfahren zur Zugangskontrolle nach Anspruch 6, **dadurch gekennzeichnet, dass** die dem Eingangsbereich (1) und/oder dem Ausgangsbereich (2) eines Zugangskontrollsystems zugeordneten BLE Sende-Empfangseinheiten zur Erhöhung der Genauigkeit der Ermittlung der Reihenfolge der mobilen elektronischen Geräte bzw. der Datenträger in der jeweiligen Spur verwendet werden, wobei zu diesem Zweck sämtliche Signale der mobilen elektronischen Geräte bzw. der Datenträger ausgewertet werden, die den Eingangsbereich (1) passiert haben, mit Ausnahme der elektronischen Geräte bzw. Datenträger, die den Ausgangsbereich (2) passiert haben, wobei zur Erhöhung der Genauigkeit der Ermittlung der Reihenfolge der mobilen elektronischen Geräte bzw. der Datenträger in der jeweiligen Spur diese durch eine Trilateration bzw. bei mehr als drei BLE Sende-Empfangseinheiten durch Multilateration lokalisiert werden, wobei zur Trilateration bzw. Multilateration die relativen oder absoluten Abstände zwischen den mobilen elektronischen Geräten bzw. den Datenträgern und BLE Sende-Empfangseinheiten der Zugangskontrollvorrichtungen und die relativen oder absoluten Abstände zwischen den mobilen elektronischen Geräten bzw. den Datenträgern und der dem Eingangsbereich und/oder dem Ausgangsbereich zugeordneten BLE Sende-Empfangseinheiten herangezogen werden.

8. Verfahren zur Zugangskontrolle nach einem der vorangehenden Ansprüche 2-7, **dadurch gekennzeichnet, dass**, die Zugangskontrollvorrichtungen (3, 4, 5, 6) kein Sperrorgan aufweisen, wobei wenn eine Person eine Zugangskontrollvorrichtung (3, 4, 5, 6) passiert, dies durch eine Vorrichtung zur Detektion von Personen erkannt wird, wobei, wenn nach dem Passieren dieser Person das in der der Zugangskontrollvorrichtung (3, 4, 5, 6) zugeordneten Spur (D, E, F, H) gemäß der Lokalisierung an erster Stelle befindliche mobile elektronische Gerät anhand der empfangenen ID dasselbe ist, wie vor dem Passieren der Person, ein Zugang ohne Zugangsberechtigung erkannt und ein optisches und/oder akustisches Signal ausgegeben wird.

9. Verfahren zur Zugangskontrolle nach einem der vorangehenden Ansprüche 2-6, **dadurch gekennzeichnet, dass**, die Zugangskontrollvorrichtungen (3, 4, 5, 6) ein Sperrorgan aufweisen, welches im Öffnungssinne betätigt wird, wenn der ID des gemäß der Lokalisierung an erster Stelle in der der Zugangskontrollvorrichtung (3, 4, 5, 6) zugeordneten Spur (D, E, F, H) befindlichen mobilen elektronischen Gerätes oder Datenträgers eine gültige Zugangsberechtigung zugeordnet ist, wobei wenn eine Person eine Zugangskontrollvorrichtung (3, 4, 5, 6) passiert, dies durch eine Vorrichtung zur Detektion von Personen oder durch die Betätigung des Sperrorgans erkannt wird, wobei, wenn nach dem Passieren dieser Person das in der der Zugangskontrollvorrichtung (3, 4, 5, 6) zugeordneten Spur (D, E, F, H) gemäß der Lokalisierung an erster Stelle befindliche mobile elektronische Gerät anhand der empfangenen ID dasselbe ist, wie vor dem Passieren der Person, ein Zugang ohne Zugangsberechtigung erkannt und ein optisches und/oder akustisches Signal ausgegeben wird.

10. Zugangskontrollsystem, insbesondere zur Durchführung des Verfahrens nach einem der Ansprüche 1-9, mit einem Eingangs- und einem Ausgangsbereich (1, 2), **dadurch gekennzeichnet, dass** es einen ein- oder mehrspurigen Zugang aufweist, wobei jeder Spur (D, E, F, H) eine Zugangskontrollvorrichtung (3, 4, 5, 6) zugeordnet ist, welche zumindest eine BLE Sende-Empfangseinheit (TRX-1, TRX-2, TRX-3, TRX-4) aufweist, die mit einem Computer umfassend eine CPU und Speichermittel verbunden ist und eine von mobilen elektronischen Geräten oder Datenträgern über den Bluetooth Low Energy-Standard im Rahmen eines "Broadcasting" in regelmäßigen Abständen gesendete ID, der zumindest eine Zugangsberechtigung eindeutig zugeordnet ist, empfängt, wobei die Überprüfung einer Zugangsberechtigung anhand der Auswertung einer von einem einer Zugangskontrollvorrichtung (3, 4, 5, 6) in Zugangsrichtung am nächsten befindlichen mobilen elektronischen Gerät oder einem einer Zugangskontrollvorrichtung (3, 4, 5, 6) am nächsten befindliche Datenträger gesendeten ID erfolgt, wobei dem Eingangsbereich (1) des Zugangskontrollsystems zumindest eine BLE Sende-Empfangseinheit (TRX-IN) zugeordnet ist, welche mobile elektronische Geräte oder Datenträger anhand der von den mobilen elektronischen Geräten oder Datenträgern gesendeten ID erfasst, die den Eingangsbereich (1) passieren und wobei dem Ausgangsbereich (2) des Zugangskontrollsystems zumindest eine BLE Sende-Empfangseinheit (TRX-OUT) zugeordnet ist, welche die mobilen elektronischen Geräte oder die Datenträger anhand der von den mobilen elektronischen Geräten oder Datenträgern gesendeten ID erfasst, die den Ausgangsbereich (2) passieren, wobei die mobilen elektronischen Geräte oder die Datenträger mittels der Auswertung des Received Signal Strength Indikators (RSSI) lokalisierbar sind, wobei die Signalstärke gemessen wird, mit der das Signal eines mobilen elektronischen Gerätes oder eines Datenträgers enthaltend die ID von den Zugangskontrollvorrichtungen (3, 4, 5, 6) zugeordneten BLE Sende-Empfangseinheiten (TRX-1, TRX-2, TRX-3, TRX-4) empfangen wird.

11. Zugangskontrollsystem nach Anspruch 10, **dadurch gekennzeichnet, dass** die Zugangskontrollvorrichtungen (3, 4, 5, 6) kein Sperrorgan aufweisen, wobei jede Zugangskontrollvorrichtung (3, 4, 5, 6) eine Vorrichtung zur Detektion von Personen aufweist.

12. Zugangskontrollsystem nach Anspruch 10 oder 11, **dadurch gekennzeichnet, dass** bei einem Zugangskontrollsystem mit einem einspurigen Zugang eine der einzigen Spur zugeordnete Zugangskontrollvorrichtung vorgesehen ist, wobei die Zutrittsbreite von zwei BLE Sende-Empfangseinheiten flankiert wird.
